# EUROPÄISCHE PATENTSCHRIFT

(11) **EP 3 497 529 B1**
(45) Veröffentlichungstag und Bekanntmachung des Hinweises auf die Patenterteilung: **02.09.2020**
(21) Anmeldenummer: 17749387.1
(22) Anmeldetag: 20.07.2017
(51) Int. Cl.: G05D 1/00, G05D 1/02

(54) **VERFAHREN ZUM BETRIEB EINES SICH SELBSTTÄTIG FORTBEWEGENDEN FLÄCHENBEARBEITUNGSGERÄTES**
METHOD FOR OPERATING AN INDEPENDENTLY MOVING SURFACE TREATMENT DEVICE
PROCÉDÉ DE FONCTIONNEMENT D'UN APPAREIL DE TRAITEMENT DE SURFACE À DÉPLACEMENT AUTONOME

(30) Priorität: 08.08.2016 DE 102016114628
(43) Veröffentlichungstag der Anmeldung: 19.06.2019
(73) Patentinhaber: Vorwerk & Co. Interholding GmbH, 42275 Wuppertal (DE)
(72) Erfinder: STRANG, Benjamin, 42651 Solingen (DE)
(74) Vertreter: Müller, Enno
(86) Internationale Anmeldenummer: PCT/EP2017/068392
(87) Internationale Veröffentlichungsnummer: WO 2018/028968

(56) Entgegenhaltungen:
- EP-A1- 2 423 893
- US-A1- 2013 232 717
- US-A1- 2015 170 509

## Beschreibung

### Gebiet der Technik

Die Erfindung betrifft ein Verfahren zum Betrieb eines sich selbsttätig fortbewegenden Flächenbearbeitungsgerätes, insbesondere eines Reinigungsroboters, wobei das Flächenbearbeitungsgerät in einer Umgebung verfahren kann und hierbei gegebenenfalls Flächenbearbeitungsaufgaben ausführt, und wobei eine Hindernisdetektionseinrichtung des Flächenbearbeitungsgerätes ein Hindernis innerhalb der Umgebung misst.

Des Weiteren betrifft die Erfindung ein sich selbsttätig fortbewegendes Flächenbearbeitungsgerät, insbesondere einen Reinigungsroboter, welches in einer Umgebung verfahren kann und hierbei gegebenenfalls Flächenbearbeitungsaufgaben ausführt, mit einer Hindernisdetektionseinrichtung zur Messung eines Hindernisses innerhalb der Umgebung und einer Steuereinrichtung.

Des Weiteren betrifft die Erfindung ein Set aus einem derartigen sich selbsttätig fortbewegenden Flächenbearbeitungsgerät und einem mit dem Flächenbearbeitungsgerät in Kommunikationsverbindung stehenden externen Gerät, welches ein Display zur Darstellung einer Umgebungskarte des Flächenbearbeitungsgerätes aufweist.

Darüber hinaus betrifft die Erfindung auch ein Computerprogrammprodukt zur Installation auf einem sich selbsttätig fortbewegenden Flächenbearbeitungsgerät und/oder auf einem mit einem Flächenbearbeitungsgerät in Kommunikationsverbindung stehenden externen Gerät, wobei das Computerprogrammprodukt ausgebildet ist, das Flächenbearbeitungsgerät zu steuern.

### Stand der Technik

Verfahren zum Betrieb eines solchen Flächenbearbeitungsgerätes sind im Stand der Technik bekannt. Dabei kann das Flächenbearbeitungsgerät beispielsweise anhand einer selbst erstellten und gespeicherten Umgebungskarte innerhalb eines Raumes und/oder mehrerer Räume einer Wohnung hin- und herfahren und vorzugsweise Reinigungsaufgaben wie Saugen und/oder Wischen ausführen. Es ist ebenfalls bekannt, solche Flächenbearbeitungsgeräte zusätzlich mit weiteren Funktionen auszustatten, beispielsweise zur Überwachung eines Raumes in Bezug auf einen unbefugten Zutritt einer Person.

Die Druckschrift EP 2 423 893 B1 offenbart beispielsweise ein selbsttätig verfahrbares Reinigungsgerät, welches Gegenstände mittels einer Sensorik erfasst, wobei eines oder mehrere Umgebungsmerkmale zumindest in einem bestimmten, vorgegebenen Zeitraum erfasst werden und bei einer Änderung einer Anordnung eines Gegenstandes oder einem unbefugten Zutritt einer Person ein Alarm ausgelöst wird. Die Änderung der Anordnung eines Gegenstandes und/oder die Anwesenheit eines neuen Gegenstandes bzw. einer Person wird mittels einer Abstandsmesseinrichtung und/oder mittels eines Hindernissensors detektiert, indem eine hinterlegte Referenzkarte des Raumes mit aktuellen Messwerten verglichen wird.

### Zusammenfassung der Erfindung

Ausgehend von dem vorgenannten Stand der Technik ist es Aufgabe der Erfindung, einen unbefugten Zutritt einer Person, insbesondere einen Einbruch, innerhalb einer Umgebung des Flächenbearbeitungsgerätes auf eine alternative Art und Weise festzustellen, insbesondere ohne Zuhilfenahme einer gespeicherten Umgebungskarte des Flächenbearbeitungsgerätes.

Zur Lösung der vorgenannten Aufgabe schlägt die Erfindung ein Verfahren zum Betrieb eines sich selbsttätig fortbewegenden Flächenbearbeitungsgerätes vor, bei welchem das Flächenbearbeitungsgerät über eine von einem Nutzer vordefinierte Zeitspanne unbewegt an einem definierten Ort, insbesondere in einem Bewegungsbereich eines bestimmten Objektes, der Umgebung verbleibt, wobei die Hindernisdetektionseinrichtung während der Zeitspanne wiederholt einen Abstand zu einem bestimmten Objekt misst und die gemessenen Werte des Abstandes hinsichtlich einer zeitlichen Änderung auswertet, und/oder wobei die Hindernisdetektionseinrichtung während der Zeitspanne eine gegebenenfalls eintretende Kollision mit dem Objekt detektiert, wobei bei einer Änderung über einem definierten Grenzwert und/oder bei Kollision ein Alarmsignal ausgegeben wird.

Erfindungsgemäß wird die Hindernisdetektionseinrichtung des Flächenbearbeitungsgerätes nun während einer Zeitspanne, innerhalb welcher sich das Flächenbearbeitungsgerät nicht fortbewegt oder seine Orientierung ändert, genutzt, um eine Bewegung des beobachteten Objektes zu detektieren. Dies kann erfindungsgemäß entweder durch aufeinanderfolgende Messungen eines Abstandes zu dem Objekt erfolgen, oder alternativ durch die Messung einer Kollision mit dem Objekt. Im erstgenannten Fall wird eine als Abstandsmesseinrichtung ausgebildete Hindernisdetektionseinrichtung des Flächenbearbeitungsgerätes verwendet, beispielsweise eine Lasertriangulationsmesseinrichtung, ein Ultraschallsensor oder dergleichen. Im zweitgenannten Fall ist die Hindernisdetektionseinrichtung ein Sensor, welcher direkt oder indirekt einen Kontakt zwischen dem Objekt und dem Flächenbearbeitungsgerät detektieren kann. Im Gegensatz zum Stand der Technik ist bei beiden alternativen Ausführungsformen der Erfindung kein Vergleich mit einer Umgebungskarte des Flächenbearbeitungsgerätes notwendig. Vielmehr werden entweder während der Zeitspanne gemessene Abstände miteinander verglichen, wobei eine gegebenenfalls auftretende Änderung auf eine Verlagerung des Objektes relativ zu dem Flächenbearbeitungsgerät schließen lässt, und/oder eine Kollision des Flächenbearbeitungsgerätes mit dem Objekt als absolutes Ereignis. Eine Abstandsänderung bzw. ein Kontakt mit dem Objekt führt dann zu einer Erkennung einer Bewegung, woraufhin eine Auswerte- und Steuereinrichtung des Flächenbearbeitungsgerätes ein Alarmsignal veranlassen kann.

Die Hindernisdetektionseinrichtung wird somit gemäß der Erfindung nicht oder nicht nur zur Detektion von Hindernissen während einer Fahrt, beispielsweise einer Reinigungsfahrt, des Flächenbearbeitungsgerätes innerhalb der Umgebung verwendet, sondern vielmehr auch zur Überwachung der Umgebung in Bezug auf einen Einbruch, welcher mit einer Bewegung des beobachteten Objektes einhergeht, beispielsweise einer Bewegung eines beweglichen Fensterflügels oder eines beweglichen Türflügels, welchen ein Einbrecher bewegen muss, um in die überwachte Wohnung bzw. den überwachten Raum zu gelangen.

Die Hindernisdetektionseinrichtung dient somit erfindungsgemäß auch als Einbruchsensor. Vorteilhaft ist das Flächenbearbeitungsgerät dabei zur Überwachung der Umgebung nicht mehr auf die Erstellung einer Umgebungskarte eines Raumes oder einer Wohnung angewiesen.

Es wird vorgeschlagen, dass ein Nutzer des Flächenbearbeitungsgerätes das Objekt in einer auf einem Display des Flächenbearbeitungsgerätes und/ oder auf einem Display eines mit dem Flächenbearbeitungsgerät in Kommunikationsverbindung stehenden externen Gerätes angezeigten Umgebungskarte auswählt. Der Nutzer kann den Einsatzort des Flächenbearbeitungsgerätes zur Raumüberwachung bzw. das zu überwachende Objekt bequem auf dem Display des Flächenbearbeitungsgerätes bzw. des externen Gerätes auswählen. Dabei ermöglicht die grafische Darstellung der Umgebungskarte, insbesondere bei gleichzeitiger Darstellung der aktuellen Position des Flächenbearbeitungsgerätes innerhalb der Umgebungskarte, eine problemlose Orientierung des Nutzers und somit eine schnelle und zweifelsfreie Auswahl des durch das Flächenbearbeitungsgerät zu überwachenden Objektes. Die Umgebungskarte kann beispielsweise einen Grundriss einer Wohnung darstellen, in welcher das Flächenbearbeitungsgerät üblicherweise zur Reinigung oder dergleichen eingesetzt wird. In der Umgebungskarte kann der Nutzer beispielsweise den Bereich einer Eingangstür der Wohnung bzw. des Raumes auswählen. Durch die Auswahl des Objektes innerhalb der Umgebungskarte markiert der Nutzer beispielsweise das zu überwachende Objekt, wodurch gleichzeitig oder gegebenenfalls auch zeitverzögert eine Überwachungsfunktion gestartet werden kann. Das Display kann entweder ein eigenes Display des Flächenbearbeitungsgerätes sein, oder ein Display eines mit dem Flächenbearbeitungsgerät verbundenen externen Gerätes, wie beispielsweise ein Mobiltelefon, ein Tablet-PC, ein Laptop und dergleichen. In dem Fall, dass das Flächenbearbeitungsgerät in Kommunikationsverbindung mit einem solchen externen Gerät steht, ist es für das Starten einer Überwachung nicht notwendig, dass der Nutzer aktuell in der Umgebung des Flächenbearbeitungsgerätes anwesend ist. Vielmehr kann der Nutzer auch von außerhalb, bspw. über eine Mobilfunkverbindung, ein zu überwachendes Objekt auf dem Display des externen Gerätes auswählen und eine Überwachungsaufgabe starten.

Des Weiteren wird vorgeschlagen, dass das Flächenbearbeitungsgerät in Abhängigkeit von der getätigten Auswahl mittels einer Steuereinrichtung des Flächenbearbeitungsgerätes und/oder des externen Gerätes an den definierten Ort bzw. in den Bewegungsbereich des bestimmten Objektes bewegt wird und eine Position und/oder Orientierung einnimmt, welche eine Hindernisdetektion an dem bestimmten Objekt erlaubt. Gemäß dieser Ausgestaltung wird in Abhängigkeit von der getätigten Auswahl ein Steuerbefehl generiert, welcher das Flächenbearbeitungsgerät an den ausgewählten Ort bewegt. Der Steuerbefehl kann dabei entweder durch das externe Gerät generiert werden, oder von einer Auswerte- und Steuereinrichtung des Flächenbearbeitungsgerätes. In Verbindung mit einem externen Gerät ist es auch möglich, dass das externe Gerät bloß Informationen über den ausgewählten Ort an eine Auswerte- und Steuereinrichtung des Flächenbearbeitungsgerätes übermittelt, und die Auswerte- und Steuereinrichtung in Abhängigkeit davon den Steuerbefehl erstellt. Mittels des Steuerbefehls wird das Flächenbearbeitungsgerät nicht nur zu dem ausgewählten Ort hinbewegt, sondern dort vielmehr auch so platziert, dass eine Detektion an dem ausgewählten Objekt vorgenommen werden kann. Hierzu kann beispielsweise eine bestimmte Orientierung des Flächenbearbeitungsgerätes relativ zu dem Objekt notwendig sein und/oder auch ein bestimmter Abstand zu dem Objekt, beispielsweise eine Anordnung des Flächenbearbeitungsgerätes innerhalb eines üblichen Bewegungsbereiches des bestimmten Objektes. Ein Bewegungsbereich kann beispielsweise ein Schwenkbereich eines Türflügels oder eines Fensterflügels sein. Das Flächenbearbeitungsgerät parkt während der für die Überwachung definierten Zeitspanne so, dass die Hindernisdetektionseinrichtung eine Bewegung des zu überwachenden Objektes optimal wahrnehmen kann.

Des Weiteren wird vorgeschlagen, dass bei einer gemessenen Änderung des Abstandes über dem Grenzwert bzw. bei einer detektierten Kollision auf eine Bewegung des Objektes geschlossen wird und daraufhin das Alarmsignal ausgegeben wird. Der definierte Grenzwert legt fest, dass eine gemessene Abstandsdifferenz über diesem Grenzwert als eine Bewegung des Objektes interpretiert wird. Beispielsweise kann der Grenzwert wenige Millimeter betragen, beispielsweise 10 mm, jedoch auch mehrere Zentimeter. Bei einem Einbruchsversuch kommt es üblicherweise zu einer Bewegung bzw. Verlagerung des beobachteten Objektes, beispielsweise zu einem Aufschwingen eines Tür- oder Fensterflügels. Ein im Bereich des Objektes, insbesondere in dem Bewegungsbereich des Objektes, positioniertes Flächenbearbeitungsgerät kann den sich ändernden Abstand zu dem bewegten Objekt messen, oder gelangt in direkten Kontakt mit dem bewegten Objekt. Eine Abstandsänderung bzw. ein Kontakt mit dem Objekt führt dann zu einer Erkennung einer Bewegung, woraufhin eine Auswerte- und Steuereinrichtung des Flächenbearbeitungsgerätes ein Alarmsignal veranlassen kann. Dabei kann das Alarmsignal entweder von dem Flächenbearbeitungsgerät selbst emittiert werden, oder von dem mit dem Flächenbearbeitungsgerät in Kommunikationsverbindung stehenden externen Gerät oder auch einer mit dem Flächenbearbeitungsgerät kommunizierenden Hausalarmanlage. Das Alarmsignal kann ein akustisches, optisches oder auch haptisches (Vibrationssignal) sein.

Des Weiteren wird vorgeschlagen, dass eine Kollision mittels eines Kontaktsensors, Beschleunigungssensors, kapazitiven Sensors und/oder Odometrie-Sensors detektiert wird. Die Kollision zwischen dem Flächenbearbeitungsgerät und dem Objekt kann somit von einem Sensor unterschiedlicher Art und Funktionsweise gemessen werden. Ein Kontaktsensor kann beispielsweise im Bereich einer Stoßstange des Flächenbearbeitungsgerätes ausgebildet sein, insbesondere in Form eines Tasters, welcher im Falle einer Kollision, d. h. einem Kontakt mit dem überwachten Objekt, betätigt wird. Ein Beschleunigungssensor kann einen Betrag und eine Richtung einer Bewegung des Flächenbearbeitungsgerätes messen, woraus ebenfalls auf einen Kontakt mit dem beobachteten Objekt geschlossen werden kann. Darüber hinaus kann auch der zumeist ohnehin an dem Flächenbearbeitungsgerät angeordnete Odometrie-Sensor verwendet werden, welcher eine Rotation eines Rades des Flächenbearbeitungsgerätes bzw. eine daraus resultierende induzierte Motorspannung, überwacht, die eine Bewegung des Flächenbearbeitungsgerätes und damit auch eine Kollision mit dem überwachten Objekt anzeigt. Auch sind gegebenenfalls kapazitive Sensoren geeignet. Vorteilhaft ist bei allen diesen vorgeschlagenen Sensoren, dass diese einen geringen bzw. gar keinen Energiebedarf aufweisen. Dadurch sind die entsprechenden Messverfahren einer Abstandsmessung mittels beispielsweise einer Lasertriangulation überlegen.

Zudem wird vorgeschlagen, dass das Flächenbearbeitungsgerät nach Erreichen des definierten Ortes in einen Standby-Modus wechselt und durch eine Kollision mit dem Objekt aufgeweckt wird. Gemäß dieser Ausgestaltung geht das Flächenbearbeitungsgerät nach Erreichen des in der Umgebungskarte ausgewählten Ortes in einen Standby-Modus. Aus diesem Standby-Modus kann es durch eine etwaige Kollision aufgeweckt werden. Der Standby-Modus ist so ausgelegt, dass das Flächenbearbeitungsgerät mehrere Tage unter Beibehaltung der Überwachungsfunktion in diesem verbleiben kann, ohne beispielsweise an eine Basisstation fahren zu müssen, um einen Akkumulator aufzuladen. Der Standby-Modus kann gegebenenfalls auch, beispielsweise über eine Timer-Funktion, durch Fahrten zu der Basisstation unterbrochen werden. In jedem Fall bewirkt eine Kollision des Flächenbearbeitungsgerätes mit dem überwachten Objekt ein Aufwecken aus dem Standby-Modus und dann gegebenenfalls die Ausgabe bzw. Veranlassung eines Alarmsignals. Vorteilhaft arbeitet auch im Standby-Modus ein Timer oder eine Echtzeituhr. Dementsprechend kann zum Beispiel nach Ablauf einer vordefinierten Zeitspanne, die eine maximale Standby-Dauer des Flächenbearbeitungsgerätes begrenzt, der Standby-Modus beendet werden, um dem Flächenbearbeitungsgerät die Fahrt zu einer Basisstation zu ermöglichen. Alternativ zu einem Timer oder einer Echtzeituhr des Flächenbearbeitungsgerätes kann auch das externe Gerät eine entsprechende Timer-Funktion ausüben, beispielsweise kann das Flächenbearbeitungsgerät über eine WLAN-Verbindung einen Aufwachbefehl von dem externen Gerät erhalten, woraufhin das Flächenbearbeitungsgerät aus dem Standby-Modus aufgeweckt wird.

Neben dem zuvor erläuterten Verfahren zum Betrieb eines sich selbsttätig fortbewegenden Flächenbearbeitungsgerätes wird mit der Erfindung ebenso auch ein sich selbsttätig fortbewegendes Flächenbearbeitungsgerät, insbesondere ein Reinigungsroboter, vorgeschlagen, welches in einer Umgebung verfahren kann und hierbei gegebenenfalls Flächenbearbeitungsaufgaben ausführt, wobei das Flächenbearbeitungsgerät eine Hindernisdetektionseinrichtung zur Messung eines Hindernisses innerhalb der Umgebung und eine Steuereinrichtung aufweist, wobei die Steuereinrichtung eingerichtet ist, das Flächenbearbeitungsgerät über eine von einem Nutzer vordefinierte Zeitspanne unbewegt an einem definierten Ort, insbesondere in einem Bewegungsbereich eines bestimmten Objektes, der Umgebung zu positionieren, wobei die Hindernisdetektionseinrichtung eingerichtet ist, während der Zeitspanne wiederholt einen Abstand zu dem bestimmten Objekt zu messen und die gemessenen Werte des Abstandes hinsichtlich einer zeitlichen Änderung auszuwerten, und/oder während der Zeitspanne eine gegebenenfalls eintretende Kollision mit dem Objekt zu detektieren, sowie bei einer Änderung über einem definierten Grenzwert und/oder bei Kollision ein Alarmsignal auszugeben. Des Weiteren kann das vorgeschlagene Flächenbearbeitungsgerät zur Ausübung des zuvor beschriebenen Verfahrens ausgebildet sein, was insbesondere alle zuvor in Bezug auf das Verfahren erläuterten Merkmale einschließt.

Des Weiteren wird ein Set aus einem sich selbsttätig fortbewegenden Flächenbearbeitungsgerät und einem mit dem Flächenbearbeitungsgerät in Kommunikationsverbindung stehenden externen Gerät vorgeschlagen, welches ein Display zur Darstellung einer Umgebungskarte des Flächenbearbeitungsgerätes aufweist, wobei das externe Gerät ausgebildet ist, eine Auswahl eines definierten Ortes innerhalb einer auf dem Display dargestellten Umgebungskarte zu erlauben und eine Information über die Auswahl an das Flächenbearbeitungsgerät zu übermitteln, wobei das Flächenbearbeitungsgerät eingerichtet ist, sich in Abhängigkeit von der Auswahl an den definierten Ort zu bewegen und eine Orientierung einzunehmen, welche eine Messung an einem bestimmten Objekt ermöglicht, sowie über eine von einem Nutzer vordefinierte Zeitspanne unbewegt an dem definierten Ort zu verbleiben. Das sich selbsttätig fortbewegende Flächenbearbeitungsgerät ist dabei ein erfindungsgemäßes, zuvor beschriebenes Flächenbearbeitungsgerät. Entsprechend gelten die in Bezug auf das Flächenbearbeitungsgerät erläuterten Merkmale und Vorteile auch für das erfindungsgemäße Set.

Schließlich wird mit der Erfindung auch ein Computerprogrammprodukt zur Installation auf einem sich selbsttätig fortbewegenden Flächenbearbeitungsgerät und/oder auf einem mit einem Flächenbearbeitungsgerät in Kommunikationsverbindung stehenden externen Gerät vorgeschlagen, wobei das Computerprogrammprodukt ausgebildet ist, das Flächenbearbeitungsgerät zu steuern, wobei das Computerprogrammprodukt bereitstellt: einen Programmschritt zur Darstellung einer Umgebungskarte des Flächenbearbeitungsgerätes auf einem Display des Flächenbearbeitungsgerätes und/oder auf einem Display des externen Gerätes, einen Programmschritt zum Auswählen eines zu überwachenden Ortes innerhalb der Umgebungskarte, einen Programmschritt zum Steuern des Flächenbearbeitungsgerätes an den ausgewählten Ort, insbesondere in einen Bewegungsbereich eines bestimmten Objektes, einen Programmschritt zum Positionieren und unbewegten Halten des Flächenbearbeitungsgerätes an dem Ort über eine bestimmte Zeitspanne, und einen Programmschritt zur Steuerung einer Hindernisdetektionseinrichtung des Flächenbearbeitungsgerätes zur wiederholten Messung eines Abstandes zu dem bestimmten Objekt und zur Auswertung der gemessenen Abstände hinsichtlich einer zeitlichen Änderung und/oder zur Detektion einer gegebenenfalls eintretenden Kollision mit dem Objekt. Dabei kann das Computerprogrammprodukt insbesondere zur Ausführung eines zuvor beschriebenen Verfahrens ausgebildet sein. Das Computerprogrammprodukt ist vorteilhaft eine Applikation, welche entweder auf dem Flächenbearbeitungsgerät selbst installierbar ist, oder auf einem externen Gerät, wie beispielsweise einem Mobiltelefon, einem Laptop, einem Tablet-PC und dergleichen.

### Kurze Beschreibung der Zeichnungen

Im Folgenden wird die Erfindung anhand von Ausführungsbeispielen näher erläutert. Es zeigen:
- Fig. 1: ein erfindungsgemäßes Flächenbearbeitungsgerät.
- Fig. 2: eine Umgebung des Flächenbearbeitungsgerätes,
- Fig. 3: ein externes Gerät mit einem Display, auf welchem eine Umgebungskarte angezeigt ist,
- Fig. 4: ein Fortbewegen des Flächenbearbeitungsgerätes in einen Bewegungsbereich eines zu überwachenden Objektes,
- Fig. 5: das Flächenbearbeitungsgerät innerhalb des Bewegungsbereiches des zu überwachenden Objektes,
- Fig. 6: das in Figur 5 dargestellte Flächenbearbeitungsgerät bei einer Bewegung des zu überwachenden Objektes.

### Beschreibung der Ausführungsformen

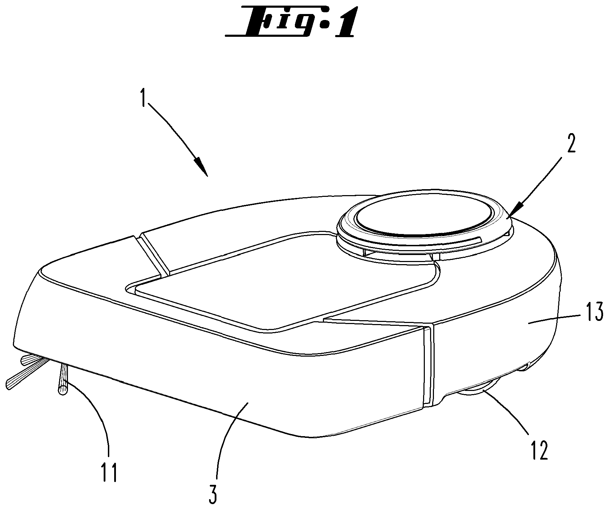

Figur 1 zeigt ein erfindungsgemäßes Flächenbearbeitungsgerät 1, welches hier als selbsttätig verfahrbarer Saugroboter ausgebildet ist. Das Flächenbearbeitungsgerät 1 verfügt über Räder 12, von welchen in der gezeigten Darstellung nur eins sichtbar ist und welche in Kombination mit einem Antrieb zum selbsttätigen Fortbewegen des Flächenbearbeitungsgerätes 1 dienen. Des Weiteren weist das Flächenbearbeitungsgerät 1 eine Bürste 11 zur Einwirkung auf eine zu reinigende Fläche auf. Das Flächenbearbeitungsgerät 1 weist zwei Hindernisdetektionseinrichtungen 2, 3 auf, von welchen eine erste Hindernisdetektionseinrichtung 2 eine Lasertriangulationseinrichtung ist, und von welchen eine zweite Hindernisdetektionseinrichtung 3 ein als Taster ausgebildeter Kontaktsensor ist, der einen Teilbereich eines Gerätegehäuses 13 des Flächenbearbeitungsgerätes 1 bildet.

Die Hindernisdetektionseinrichtungen 2, 3 dienen während eines üblichen Reinigungsbetriebs des Flächenbearbeitungsgerätes 1 zur Detektion von Hindernisse darstellenden Objekten 6, wie beispielsweise Wänden, Möbelstücken und dergleichen. Dadurch ist eine Orientierung des Flächenbearbeitungsgerätes 1 innerhalb einer Umgebung möglich, sowie die Erstellung einer Umgebungskarte 9 des Flächenbearbeitungsgerätes 1, auf welche das Flächenbearbeitungsgerät 1 bei seiner selbständigen Navigation zugreift. Die als Lasertriangulationseinrichtung ausgebildete Hindernisdetektionseinrichtung 2 kann hier in einem 360 Grad-Winkelbereich um das Flächenbearbeitungsgerät 1 Objekte 6 messen. Der Hindernisdetektionseinrichtung 2 ist eine Auswerte- und Steuereinrichtung (nicht dargestellt) zugeordnet, mit deren Hilfe die von der Hindernisdetektionseinrichtung 2 detektierten Messwerte ausgewertet werden können. Die Hindernisdetektionseinrichtung 2 ist zur kontaktlosen Messung von Objekten 6 ausgebildet. Dabei können die Objekte 6 in einem Abstand von wenigen Millimetern bis hin zu mehreren Metern detektiert werden. Die als Kontaktsensor ausgebildete Hindernisdetektionseinrichtung 3 misst die Existenz eines Objektes 6 durch direkten Kontakt mit dem zu messenden Objekt 6.

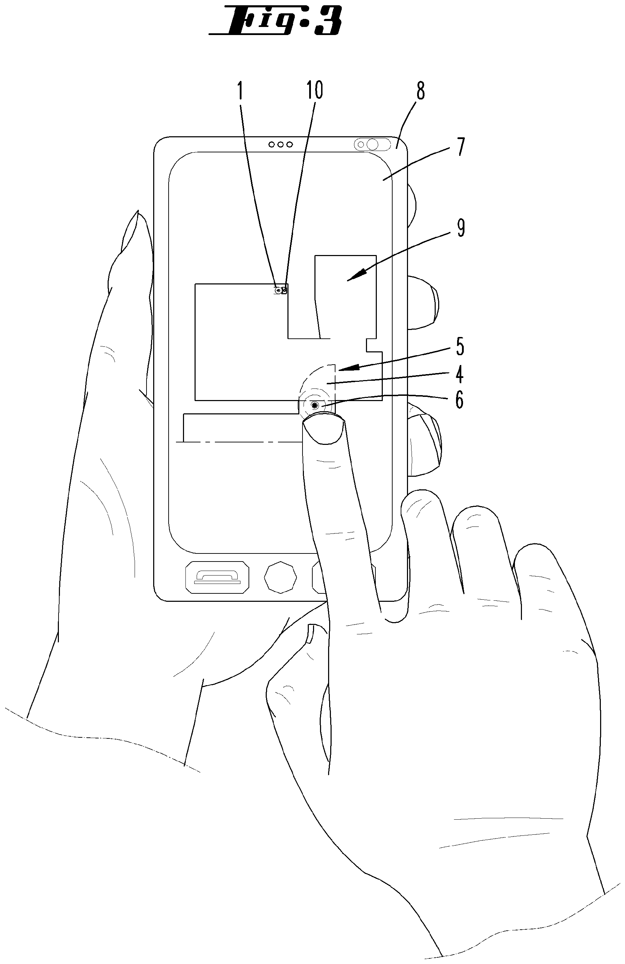

Das Flächenbearbeitungsgerät 1 verfügt zudem über ein Kommunikationsmodul, beispielsweise ein WLAN-Modul, über welches das Flächenbearbeitungsgerät 1 mit einem externen Gerät 8 (siehe Figur 3), beispielsweise einem Mobiltelefon kommunizieren kann.

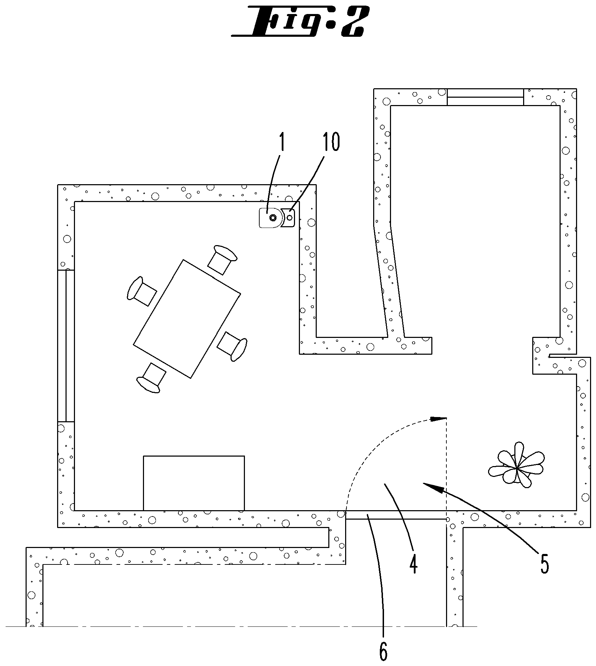

Figur 2 zeigt einen Teil einer Wohnung mit mehreren Räumen, welche in ihrer Position veränderbare Objekte 6, hier beispielsweise unter anderem einen Türflügel aufweisen. In einem der Räume befindet sich ein Flächenbearbeitungsgerät 1. Das Flächenbearbeitungsgerät 1 ist hier an einer Basisstation 10 angeordnet, beispielsweise um einen Akkumulator aufzuladen.

Das beispielhaft als schwenkbarer Türflügel ausgebildete Objekt 6 weist einen Bewegungsbereich 5 auf, welcher dem Schwenkbereich des Türflügels entspricht. Innerhalb dieses Bewegungsbereiches 5 ist ein Ort 4 definiert. Dieser Ort 4 kann grundsätzlich an jeder Stelle des Bewegungsbereiches 5 gewählt sein.

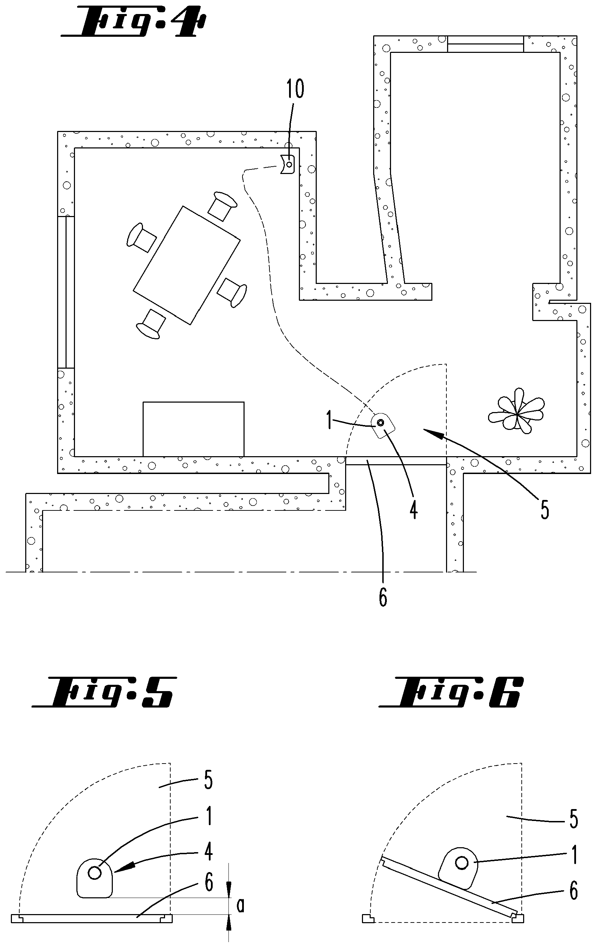

Figur 3 zeigt ein externes Gerät 8, welches hier als Mobiltelefon ausgebildet ist. Das externe Gerät 8 verfügt über ein Display 7, welches hier als Touchscreen ausgebildet ist. Auf dem Display 7 ist eine Umgebungskarte 9 dargestellt, welche der in Figur 2 gezeigten Raumsituation entspricht. In der Umgebungskarte 9 sind die aktuelle Position des Flächenbearbeitungsgerätes 1 und die Basisstation 10 eingezeichnet. In der dargestellten Umgebungskarte 9 kann ein Nutzer des externen Gerätes 8 einen Ort 4 auswählen (durch Anklicken), wodurch ein Marker innerhalb der Umgebungskarte 9 gesetzt wird. Alternativ kann der Nutzer ein zu überwachendes Objekt 6, hier den Türflügel, auswählen. Nach der Wahl des Ortes 4 bzw. des Objektes 6 muss der Nutzer auf dem externen Gerät 8 eine gewünschte Funktion auswählen, hier beispielsweise die Funktion "Überwachungsmodus starten". Daraufhin bewegt sich das Flächenbearbeitungsgerät 1 von der Basisstation 10 weg in Richtung des Ortes 4 bzw. des Objektes 6. Dies ist in Figur 4 dargestellt.

Das Flächenbearbeitungsgerät 1 gelangt in den Bewegungsbereich 5 des Objektes 6, nämlich den Schwenkbereich des Türflügels. Veranlasst durch die gewählte Funktion "Überwachungsmodus starten" wird das Flächenbearbeitungsgerät 1 in einem definierten Abstand a (siehe Figur 5) zu dem zu überwachenden Objekt 6 platziert. Dabei wird die Positionierung und Orientierung des Flächenbearbeitungsgerätes 1 so gesteuert, dass die Hindernisdetektionseinrichtung 3, d. h. der Kontaktsensor, in Richtung des zu überwachenden Objektes 6 weist.

Der Nutzer des Flächenbearbeitungsgerätes 1 kann zusätzlich mittels des externen Gerätes 8 eine Zeitspanne definieren, innerhalb welcher die Überwachungsfunktion ausgeübt werden soll. Beispielsweise kann eine Zeitspanne einer Abwesenheit des Nutzers, beispielsweise drei Stunden, definiert werden. Innerhalb dieser Zeitspanne misst die als Lasertriangulationsmesseinrichtung ausgebildete Hindernisdetektionseinrichtung 2 in definierten Zeitabständen, beispielsweise in Zeitabständen von je einer Minute, den Abstand a zwischen dem Flächenbearbeitungsgerät 1 und dem Objekt 6. Die Auswerte- und Steuereinrichtung des Flächenbearbeitungsgerätes 1 errechnet dann aus zeitlich aufeinanderfolgend gemessenen Abstandswerten eine Differenz. Dazu können entweder zwei direkt aufeinanderfolgende Messungen herangezogen werden, oder auch zwei durch weitere Messungen getrennte Messungen. Die Differenz wird mit einem definierten Grenzwert verglichen, welcher hier beispielsweise 20 mm beträgt. Dies bedeutet, dass die gemessenen Werte des Abstandes a daraufhin überwacht werden, ob diese im zeitlichen Verlauf eine Änderung von mehr als 20 mm aufweisen. Sofern dies der Fall ist, wird auf eine Bewegung des Objektes 6, nämlich ein Aufschwenken des Türflügels innerhalb des Bewegungsbereiches 5, geschlossen und ein Alarmsignal ausgelöst, welches beispielsweise zum einen als akustisches Signal des Flächenbearbeitungsgerätes 1 ausgegeben wird, und zum anderen als ein optisches Signal auf dem Display 7 des externen Gerätes 8, so dass ein Nutzer den Alarm auch bei Nichtanwesenheit innerhalb der Umgebung des Flächenbearbeitungsgerätes 1 bemerken kann. Für die zuvor beschriebene Messung mittels der Hindernisdetektionseinrichtung 2 ist eine unveränderte Position des Flächenbearbeitungsgerätes 1 an dem definierten Ort 4 erforderlich. Während der Messung bleibt das Flächenbearbeitungsgerät 1 somit örtlich unbewegt, jedoch in Bezug auf die Hindernisdetektionseinrichtung 2 aktiv, so dass fortwährend ein Abstand a zu dem Objekt 6 gemessen werden kann.

Alternativ oder zusätzlich zu der Hindernisdetektionseinrichtung 2 kann auch die als Kontaktsensor ausgebildete Hindernisdetektionseinrichtung 3 eine Überwachung des Objektes 6 ausführen. Dabei ist es möglich, dass das Flächenbearbeitungsgerät 1 nach Erreichen des definierten Ortes 4 in einen Standby-Modus wechselt und erst aufgeweckt wird, falls das Objekt 6 vor die Hindernisdetektionseinrichtung 3 stößt, nämlich vor den zugeordneten Teilbereich des Gerätegehäuses 13. Sofern die Überwachung einer Bewegung des Objektes 6 nur durch die Hindernisdetektionseinrichtung 3 vorgenommen wird, kann das Flächenbearbeitungsgerät 1 entsprechend energieschonend betrieben werden.

Sofern ein Einbruchsversuch über das Objekt 6, nämlich die gekennzeichnete Tür, stattfindet, wird das Objekt 6 in den Bewegungsbereich 5 hineingeschwenkt und bewegt sich auf den Ort 4 zu, an welchem das Flächenbearbeitungsgerät 1 unbewegt steht. Durch diese Verlagerung des Objektes 6 verändert sich zunächst der von der Hindernisdetektionseinrichtung 2 gemessene Abstand a. Danach gelangt das Objekt 6 gegebenenfalls in Kontakt mit der Hindernisdetektionseinrichtung 3 und betätigt den an dem Gerätegehäuse 13 angeordneten Taster. In beiden Fällen erkennt die Auswerte- und Steuereinrichtung des Flächenbearbeitungsgerätes 1 eine Bewegung des Objektes 6, schließt auf einen Einbruchsversuch und löst einen entsprechenden Alarm aus.

### Liste der Bezugszeichen

- 1: Flächenbearbeitungsgerät
- 2: Hindernisdetektionseinrichtung
- 3: Hindernisdetektionseinrichtung
- 4: Ort
- 5: Bewegungsbereich
- 6: Objekt
- 7: Display
- 8: Externes Gerät
- 9: Umgebungskarte
- 10: Basisstation
- 11: Bürste
- 12: Rad
- 13: Gerätegehäuse

- a: Abstand

## Patentansprüche

1. Verfahren zum Betrieb eines sich selbsttätig fortbewegenden Flächenbearbeitungsgerätes (1), insbesondere Reinigungsroboters, wobei das Flächenbearbeitungsgerät (1) in einer Umgebung verfahren kann und hierbei gegebenenfalls Flächenbearbeitungsaufgaben ausführt, und wobei eine Hindernisdetektionseinrichtung (2, 3) des Flächenbearbeitungsgerätes (1) ein Hindernis innerhalb der Umgebung misst, **dadurch gekennzeichnet, dass** das Flächenbearbeitungsgerät (1) über eine von einem Nutzer vordefinierte Zeitspanne unbewegt an einem definierten Ort (4), insbesondere in einem Bewegungsbereich (5) eines bestimmten Objektes (6), der Umgebung verbleibt, wobei die Hindernisdetektionseinrichtung (2, 3) während der Zeitspanne wiederholt einen Abstand (a) zu einem bestimmten Objekt (6) misst und die gemessenen Werte des Abstandes (a) hinsichtlich einer zeitlichen Änderung auswertet, und/oder wobei die Hindernisdetektionseinrichtung (2, 3) während der Zeitspanne eine gegebenenfalls eintretende Kollision mit dem Objekt (6) detektiert, wobei bei einer Änderung über einem definierten Grenzwert und/oder bei Kollision ein Alarmsignal ausgegeben wird.

2. Verfahren nach Anspruch 1, **dadurch gekennzeichnet, dass** ein Nutzer des Flächenbearbeitungsgerätes (1) das Objekt (6) in einer auf einem Display des Flächenbearbeitungsgerätes (1) und/oder auf einem Display (7) eines mit dem Flächenbearbeitungsgerät (1) in Kommunikationsverbindung stehenden externen Gerätes (8) angezeigten Umgebungskarte (9) auswählt.

3. Verfahren nach Anspruch 2, **dadurch gekennzeichnet, dass** das Flächenbearbeitungsgerät (1) in Abhängigkeit von der getätigten Auswahl mittels einer Steuereinrichtung des Flächenbearbeitungsgerätes (1) und/oder des externen Gerätes (8) an den definierten Ort (4) bzw. in den Bewegungsbereich (5) des bestimmten Objektes (6) bewegt wird und eine Position und/oder Orientierung einnimmt, welche eine Hindernisdetektion an dem bestimmten Objekt (6) erlaubt.

4. Verfahren nach einem der vorhergehenden Ansprüche, **dadurch gekennzeichnet, dass** bei einer gemessenen Änderung des Abstandes (a) über dem Grenzwert bzw. bei einer detektierten Kollision auf eine Bewegung des Objektes (6) geschlossen wird und daraufhin das Alarmsignal ausgegeben wird.

5. Verfahren nach einem der vorhergehenden Ansprüche, **dadurch gekennzeichnet, dass** eine Kollision mittels eines Kontaktsensors, Beschleunigungssensors, kapazitiven Sensors und/oder Odometrie-Sensors detektiert wird.

6. Verfahren nach einem der vorhergehenden Ansprüche, **dadurch gekennzeichnet, dass** das Flächenbearbeitungsgerät (1) nach Erreichen des definierten Ortes (4) in einen Standby-Modus wechselt und durch eine Kollision mit dem Objekt (6) aufgeweckt wird.

7. Verfahren nach einem der vorhergehenden Ansprüche, **dadurch gekennzeichnet, dass** als Objekt (6) ein beweglicher Fensterflügel oder ein beweglicher Türflügel überwacht wird.

8. Selbsttätig fortbewegendes Flächenbearbeitungsgerät (1), insbesondere Reinigungsroboter, welches in einer Umgebung verfahren kann und hierbei gegebenenfalls Flächenbearbeitungsaufgaben ausführt, mit einer Hindernisdetektionseinrichtung (2, 3) zur Messung eines Hindernisses innerhalb der Umgebung und einer Steuereinrichtung, **dadurch gekennzeichnet, dass** die Steuereinrichtung eingerichtet ist, das Flächenbearbeitungsgerät (1) über eine von einem Nutzer vordefinierte Zeitspanne unbewegt an einem definierten Ort (4), insbesondere in einem Bewegungsbereich eines bestimmten Objektes (6), der Umgebung zu positionieren, wobei die Hindernisdetektionseinrichtung (1) eingerichtet ist, während der Zeitspanne wiederholt einen Abstand (a) zu dem bestimmten Objekt (6) zu messen und die gemessenen Werte des Abstandes (a) hinsichtlich einer zeitlichen Änderung auszuwerten, und/oder während der Zeitspanne eine gegebenenfalls eintretende Kollision mit dem Objekt (6) zu detektieren, sowie bei einer Änderung über einem definierten Grenzwert und/oder bei Kollision ein Alarmsignal auszugeben.

9. Set aus einem sich selbsttätig fortbewegenden Flächenbearbeitungsgerät (1) nach Anspruch 8 und einem mit dem Flächenbearbeitungsgerät (1) in Kommunikationsverbindung stehenden externen Gerät (8), welches ein Display (7) zur Darstellung einer Umgebungskarte (9) des Flächenbearbeitungsgerätes (1) aufweist, **dadurch gekennzeichnet, dass** das externe Gerät (8) ausgebildet ist, eine Auswahl eines definierten Ortes (4) innerhalb einer auf dem Display (7) dargestellten Umgebungskarte (9) zu erlauben und eine Information über die Auswahl an das Flächenbearbeitungsgerät (1) zu übermitteln, wobei das Flächenbearbeitungsgerät (1) eingerichtet ist, sich in Abhängigkeit von der Auswahl an den definierten Ort (4) zu bewegen und eine Orientierung einzunehmen, welche eine Messung an einem bestimmten Objekt (6) ermöglicht, sowie über eine von einem Nutzer vordefinierte Zeitspanne unbewegt an dem definierten Ort (4) zu verbleiben.

10. Computerprogrammprodukt zur Installation auf einem sich selbsttätig fortbewegenden Flächenbearbeitungsgerät (1) und/oder auf einem mit einem Flächenbearbeitungsgerät (1) in Kommunikationsverbindung stehenden externen Gerät (8), wobei das Computerprogrammprodukt ausgebildet ist, das Flächenbearbeitungsgerät (1) zu steuern, insbesondere zur Ausführung eines Verfahrens nach einem der Ansprüche 1 bis 7, **dadurch gekennzeichnet, dass** das Computerprogrammprodukt bereitstellt: einen Programmschritt zur Darstellung einer Umgebungskarte (9) des Flächenbearbeitungsgerätes (1) auf einem Display des Flächenbearbeitungsgerätes (1) und/oder auf einem Display (7) des externen Gerätes (8), einen Programmschritt zum Auswählen eines zu überwachenden Ortes (4) innerhalb der Umgebungskarte (9), einen Programmschritt zum Steuern des Flächenbearbeitungsgerätes (1) an den ausgewählten Ort (4), insbesondere in einen Bewegungsbereich (5) eines bestimmten Objektes (6), einen Programmschritt zum Positionieren und unbewegten Halten des Flächenbearbeitungsgerätes (1) an dem Ort (4) über eine bestimmte Zeitspanne, und einen Programmschritt zur Steuerung einer Hindernisdetektionseinrichtung (2, 3) des Flächenbearbeitungsgerätes (1) zur wiederholten Messung eines Abstandes (a) zu dem bestimmten Objekt (6) und zur Auswertung der gemessenen Abstände (a) hinsichtlich einer zeitlichen Änderung und/oder zur Detektion einer gegebenenfalls eintretenden Kollision mit dem Objekt (6).

## Claims

1. A method for operating an independently moving surface treatment device (1), particularly a cleaning robot, wherein the surface treatment device (1) can travel in an environment and in the process perform surface treatment tasks where necessary, and wherein an obstacle detection device (2, 3) of the surface treatment device (1) measures an obstacle within the environment, **characterized in that** the surface treatment device (1) remains motionless at a defined location (4) of the environment, particularly in a range of motion (5) of a certain object (6), during a user-predefined time span, wherein the obstacle detection device (2, 3) repeatedly measures a distance (a) to a certain object (6) and evaluates the measured values of the distance (a) with respect to a time rate of change during the time span and/or wherein the obstacle detection device (2, 3) detects a potentially occurring collision with the object (6) during the time span, and wherein an alarm signal is output in case of a change beyond a defined threshold value and/or in case of a collision.

2. The method according to claim 1, **characterized in that** a user of the surface treatment device (1) selects the object (6) in an environment map (9) displayed on a display of the surface treatment device (1) and/or on a display (7) of an external device (8), which is communicatively linked to the surface treatment device (1).

3. The method according to claim 2, **characterized in that** the surface treatment device (1) is respectively moved to the defined location (4) or into the range of motion (5) of the certain object (6) in dependence on the previous selection by means of a control unit of the surface treatment device (1) and/or of the external device (8), and **in that** the surface treatment device assumes a position and/or orientation, which allows an obstacle detection on the certain object (6).

4. The method according to one of the preceding claims, **characterized in that** a measured change of the distance (a) beyond the threshold value or a detected collision respectively implies a motion of the object (6) and results in the output of the alarm signal.

5. The method according to one of the preceding claims, **characterized in that** a collision is detected by means of a contact sensor, an acceleration sensor, a capacitive sensor and/or an odometric sensor.

6. The method according to one of the preceding claims, **characterized in that** the surface treatment device (1) switches into a standby mode after it reaches the defined location (4) and is awakened by a collision with the object (6).

7. The method according to one of the preceding claims, **characterized in that** the monitored object (6) is a movable window sash or a movable door leaf.

8. An independently moving surface treatment device (1), particularly a cleaning robot, which can travel in an environment and in the process perform surface treatment tasks where necessary, wherein said surface treatment device comprises an obstacle detection device (2, 3) for measuring an obstacle within the environment and a control unit, **characterized in that** the control unit is designed for positioning the surface treatment device (1) motionlessly at a defined location (4) of the environment, particularly in a range of motion of a certain object (6), during a user-predefined time span, wherein the obstacle detection device (1) is designed for repeatedly measuring a distance (a) to the certain object (6) and evaluating the measured values of the distance (a) with respect to a time rate of change during the time span and/or for detecting a potentially occurring collision with the object (6) during the time span, as well as for outputting an alarm signal in case of a change beyond a defined threshold value and/or in case of a collision.

9. A set consisting of an independently moving surface treatment device (1) according to claim 8 and an external device (8), which is communicatively linked to the surface treatment device (1) and comprises a display (7) for displaying an environment map (9) of the surface treatment device (1), **characterized in that** the external device (8) is designed for allowing the selection of a defined location (4) within an environment map (9) displayed on the display (7) and for transmitting information on the selection to the surface treatment device (1), wherein the surface treatment device (1) is designed for moving to the defined location (4) in dependence on the selection and assuming an orientation, which allows a measurement on a certain object (6), as well as for remaining at the defined location (4) motionlessly during a user-predefined time span.

10. A computer program product for being installed on an independently moving surface treatment device (1) and/or on an external device (8), which is communicatively linked to the surface treatment device (1), wherein the computer program product is designed for controlling the surface treatment device (1), particularly for carrying out a method according to one of claims 1-7, **characterized in that** the computer program product comprises: a program step for displaying an environment map (9) of the surface treatment device (1) on a display of the surface treatment device (1) and/or on a display (7) of the external device (8), a program step for selecting a location (4) to be monitored within the environment map (9), a program step for moving the surface treatment device (1) to the selected location (4), particularly into a range of motion (5) of a certain object (6), a program step for motionlessly positioning the surface treatment device (1) at the location (4) during a defined time span, and a program step for controlling an obstacle detection device (2, 3) of the surface treatment device (1) to repeatedly measure a distance (a) to the certain object (6) and evaluate the measured distances (a) with respect to a time rate of change and/or to detect a potentially occurring collision with the object (6).

## Revendications

1. Procédé pour faire fonctionner un appareil de traitement de surface (1) à déplacement automatique, en particulier un robot de nettoyage, dans lequel l'appareil de traitement de surface (1) peut se déplacer dans un environnement et ce faisant effectue le cas échéant des tâches de traitement de surface, et dans lequel un dispositif de détection d'obstacle (2, 3) de l'appareil de traitement de surface (1) mesure un obstacle dans l'environnement, **caractérisé en ce que** l'appareil de traitement de surface (1) reste immobile à un endroit défini (4) de l'environnement, en particulier dans une zone de mouvement (5) d'un objet donné (6), pendant un laps de temps prédéfini par un utilisateur, dans lequel le dispositif de détection d'obstacle (2, 3) mesure de manière répétée une distance (a) à un objet donné (6) pendant le laps de temps et évalue les valeurs mesurées de la distance (a) quant à une modification dans le temps, et/ou dans lequel le dispositif de détection d'obstacle (2, 3) détecte une collision avec l'objet (6) se produisant le cas échéant pendant le laps de temps, dans lequel un signal d'alarme est émis en cas de modification au-dessus d'une valeur limite définie et/ou en cas de collision.

2. Procédé selon la revendication 1, **caractérisé en ce qu'**un utilisateur de l'appareil de traitement de surface (1) sélectionne l'objet (6) dans une carte d'environnement (9) affichée sur un écran de l'appareil de traitement de surface (1) et/ou sur un écran (7) d'un dispositif externe (8) en liaison de communication avec l'appareil de traitement de surface (1).

3. Procédé selon la revendication 2, **caractérisé en ce que** l'appareil de traitement de surface (1) est déplacé à l'endroit défini (4) ou dans la zone de mouvement (5) de l'objet donné (6) au moyen d'un dispositif de commande de l'appareil de traitement de surface (1) et/ou du dispositif externe (8) en fonction de la sélection effectuée, et prend une position et/ou une orientation qui permet une détection d'obstacle au niveau de l'objet donné (6).

4. Procédé selon l'une des revendications précédentes, **caractérisé en ce qu'**un mouvement de l'objet (6) est déduit d'une modification mesurée de la distance (a) au-dessus de la valeur limite ou d'une collision détectée et à la suite de quoi le signal d'alarme est émis.

5. Procédé selon l'une des revendications précédentes, **caractérisé en ce qu'**une collision est détectée au moyen d'un capteur de contact, d'un capteur d'accélération, d'un capteur capacitif et/ou d'un capteur d'odométrie.

6. Procédé selon l'une des revendications précédentes, **caractérisé en ce que** l'appareil de traitement de surface (1) passe en mode veille après avoir atteint l'endroit défini (4) et est réveillé par une collision avec l'objet (6).

7. Procédé selon l'une des revendications précédentes, **caractérisé en ce qu'**un vantail de fenêtre mobile ou un vantail de porte mobile est surveillé en tant qu'objet (6).

8. Appareil de traitement de surface (1) à déplacement automatique, en particulier robot de nettoyage, qui peut se déplacer dans un environnement et effectuer ce faisant des tâches de traitement de surface, avec un dispositif de détection d'obstacle (2, 3) pour mesurer un obstacle dans l'environnement et un dispositif de commande, **caractérisé en ce que** le dispositif de commande est configuré pour positionner l'appareil de traitement de surface (1) de manière immobile à un endroit défini (4) de l'environnement, en particulier dans une zone de mouvement d'un objet donné (6), pendant un laps de temps prédéfinie par un utilisateur, dans lequel le dispositif de détection d'obstacle (1) est configuré pour mesurer de manière répétée une distance (a) à l'objet donné (6) pendant le laps de temps et pour évaluer les valeurs mesurées de la distance (a) quant à une modification dans le temps, et/ou pour détecter une collision avec l'objet (6) se produisant le cas échéant pendant le laps de temps, ainsi que pour émettre un signal d'alarme en cas de modification au-dessus d'une valeur limite définie et/ou en cas de collision.

9. Ensemble comprenant un appareil de traitement de surface (1) à déplacement automatique selon la revendication 8 et un dispositif externe (8) qui est en liaison de communication avec l'appareil de traitement de surface (1) et présente un écran (7) pour afficher une carte d'environnement (9) de l'appareil de traitement de surface (1), **caractérisé en ce que** le dispositif externe (8) est conçu pour permettre une sélection d'un endroit défini (4) dans une carte d'environnement (9) affichée sur l'écran (7) et pour transmettre une information sur la sélection à l'appareil de traitement de surface (1), dans lequel l'appareil de traitement de surface (1) est configuré pour se déplacer à l'endroit défini (4) en fonction de la sélection et pour prendre une orientation qui permet une mesure à un objet donné (6), ainsi que pour rester immobile à l'endroit défini (4) pendant un laps de temps prédéfini par un utilisateur.

10. Produit de programme d'ordinateur destiné à être installé sur un appareil de traitement de surface (1) à déplacement automatique et/ou sur un dispositif externe (8) en liaison de communication avec un appareil de traitement de surface (1), dans lequel le produit de programme d'ordinateur est conçu pour commander l'appareil de traitement de surface (1), en particulier pour mettre en œuvre un procédé selon l'une des revendications 1 à 7, **caractérisé en ce que** le produit de programme d'ordinateur fournit : une étape de programme pour afficher une carte d'environnement (9) de l'appareil de traitement de surface (1) sur un écran de l'appareil de traitement de surface (1) et/ou sur un écran (7) du dispositif externe (8), une étape de programme pour sélectionner un endroit (4) à surveiller dans la carte d'environnement (9), une étape de programme pour conduire l'appareil de traitement de surface (1) à l'endroit sélectionné (4), en particulier dans une zone de mouvement (5) d'un objet donné (6), une étape de programme pour le positionnement et le maintien immobile de l'appareil de traitement de surface (1) à l'endroit (4) pendant un laps de temps déterminé, et une étape de programme pour la commande d'un dispositif de détection d'obstacle (2, 3) de l'appareil de traitement de surface (1) pour la mesure répétée d'une distance (a) à l'objet donné (6) et pour l'évaluation des distances mesurées (a) quant à une modification dans le temps et/ou pour la détection d'une collision le cas échéant avec l'objet (6).
